# EUROPÄISCHE PATENTANMELDUNG

(11) **EP 0 774 852 A2**
(43) Veröffentlichungstag der Anmeldung: **21.05.1997**
(21) Anmeldenummer: 96110949.3
(22) Anmeldetag: 06.07.1996
(51) Int. Cl.: H04M 1/65

(54) **Verfahren zur automatischen Nachrichtenübermittlung über ein Telefon mit Anrufbeantworter**

(30) Priorität: 15.11.1995 DE 19542503
(71) Anmelder: Deutsche Telekom AG, 53113 Bonn (DE)
(72) Erfinder: Schröder, Günter, 53175 Bonn (DE)

(57) **Zusammenfassung**

**2.1.** Die erfindungsgemäße Lösung soll eine Möglichkeit bieten, die es dem angerufenen Teilnehmer gestattet, auf eine empfangene Sprachinformation, welche automatisch abgesetzt wurde, sofort zu reagieren.
**2.2.** Die erfindungsgemäße Lösung setzt ein Telefon mit Anrufbeantworter voraus, welches die Möglichkeit bietet, eine auf dem Anrufbeantworter aufgezeichnete Sprachinformation, entsprechend einem eingegeben Zeitintervall, automatisch zu einem anderen Telefon zu übertragen. Erfindungsgemäß wird während der bestehenden Verbindung nach der Übertragung der eigentlichen Sprachinformation vom Anrufbeantworter des anrufenden Teilnehmers A zum Teilnehmer B ein Hinweisansagetext übertragen. Dieser Hinweisansagetext fordert den angerufenen Teilnehmer B auf, eine Rückantwort auf den auf Aufnahme geschalteten Anrufbeantworter des Teilnehmers A aufzusprechen.
**2.3.** Die erfindungsgemäße Lösung läßt sich vorteilhaft bei Telefonen mit integriertem Anrufbeantworter verwenden, die über die Möglichkeit der Rufweitermeldung verfügen.

## Beschreibung

Die erfindungsgemäße Lösung bezieht sich auf ein Verfahren und eine Anordnung zur automatischen Nachrichtenübermittlung, wobei als Aufzeichnungsmedium ein integrierter Anrufbeantworter verwendet wird.

Zum bekannten Stand der Technik gehört die technische Lösung des durch die Telekom vertriebenen Komforttelefons Actron AB mit volldigitalem Anrufbeantworter. Dieses Telefon ist mit einem Display ausgerüstet und verfügt über eine menügesteuerte optisch und akustisch sich selbst erklärende Bedienerführung. Die Besonderheiten dieses Telefons bestehen in Form der Rufweitermeldung zu einer beliebigen Telefon-, Autotelefon-, Cityruf- oder Eurosignal-Nummer und der termingerechten Übermittlung von zuvor aufgenommenen Nachrichten. Das Telefon Actron AB kann zu einem eingestellten Termin automatisch einen vom Benutzer des Telefons gespeicherten Text an eine andere oder an die eigene Rufnummer übermitteln. Wenn der Teilnehmer, für den der Text bestimmt ist, nicht sofort erreicht werden kann, weil sein Endgerät besetzt ist oder niemand abhebt, versucht Actron AB noch zweimal nach jeweils 15 Minuten die Nachricht weiterzugeben. Während der Übertragung zeigt das Display die Rufnummer, an die das Texttelegramm übermittelt wird. Es besteht die Möglichkeit, bis zu fünf solcher Texttelegramme - auch TT-Routinen genannt - einzugeben. Actron B hält sie bereit und führt sie selbstständig zum jeweils eingegebenen Termin aus.

Ziel der Erfindung ist die Bereitstellung einer Möglichkeit, die es dem angerufenen Teilnehmer gestattet, auf eine empfangene Sprachinformation, welche automatisch an ihn abgesetzt wurde, sofort zu reagieren.

Die erfindungsgemäße Lösung setzt ein Telefon mit Anrufbeantworter voraus, welches über die Möglichkeit der Rufweitermeldung von auf dem Anrufbeantworter aufgesprochenen Sprachinformationen zu einer beliebigen Telefon-, Autotelefon-, Cityruf- oder Eurosignal-Nummer verfügt. Ein derartig ausgerüstetes Telefon kann zu einem eingestellten Termin automatisch eine vom Benutzer des Telefons gespeicherte Sprachinformation an eine andere oder an die eigene Rufnummer übermitteln. Die erfindungsgemäße Lösung bezieht sich auf eine bereits automatisch hergestellte Verbindung vom Telefon eines Teilnehmers A zum Telefon eines Teilnehmers B. Nach Übertragung der eigentlichen Sprachinformation zum Telefon des Teilnehmers B wird noch während der bestehenden Verbindung vom Anrufbeantworter des Telefons des Teilnehmers A automatisch eine weitere Information in Form eines Hinweisansagetextes zum Telefon des Teilnehmers B übertragen. Dieser Hinweisansagetext enthält die Aufforderung, nach einem Hörton, der die Umschaltung des Anrufbeantworters auf die Aufnahmefunktion anzeigt, eine Antwort auf die soeben übermittelte Sprachinformation bzw. eine Sprachmitteilung auf den auf Aufnahme geschalteten Anrufbeantworter des Telefons des Teilnehmers A aufzusprechen.

Die erfindungsgemäße Lösung wird anhand eines Ausführungsbeispiels näher erläutert:

Voraussetzung ist das Vorhandensein eines Telefons mit integriertem Anrufbeantworter, das mit einem Display ausgerüstet ist. Der Teilnehmer A, der über sein Telefon bzw. über seinen Anrufbeantworter die Sprachinformation absetzen möchte, wird wie bereits bekannt, bei Aktivierung der LED-Funktionstaste (grün) zur Eingabe seiner Sprachinformation in seinen Anrufbeantworter aufgefordert. Das geschieht über einen Hinweisansagetext vom Anrufbeantworter "Sprechen Sie jetzt" bzw. über eine dementsprechende Aufforderung über das Display. Nach Eingabe der Sprachinformation wird die LED-Funktionstaste "grün" erneut betätigt. Durch Blinken fordert sie den A-Teilnehmer zum Einstellen der automatischen Wahlwiederholung auf (Signalton - ROM-Text: Wählen Sie jetzt den Zeittakt). Der Teilnehmer A legt über die Telefontastatur die Intervalle für die automatische Wahlwiederholung in Minuten bzw. in Stunden fest. Die Anzahl der nacheinander erfolgenden Wahlversuche wird mit mindestens 5 Wahlversuchen festgelegt.
Erreicht das Telefon des Teilnehmers A das Telefon des Teilnehmers B, wird nach Aufbau der Verbindung zwischen beiden Telefonen die Sprachinformation automatisch übermittelt. Nach Übermittlung der Sprachinformation vom Anrufbeantworter des Telefons des Teilnehmers A zum Telefon des Teilnehmers B wird noch während der bestehenden Verbindung ein auf dem Anrufbeantworter des Teilnehmers A aufgezeichneter Ansagetext zum Telefon des Teilnehmers B übertragen. Dieser Ansagetext enthält die Aufforderung an den Teilnehmer B, seinerseits eine Nachricht für den Teilnehmer A zu hinterlassen. Das Schlußsignal (Antippen der LED "grün" zur Aktivierung der automatischen Nachrichtenübermittlung durch den Teilnehmer A) läßt das Telefon des Teilnehmers A unter Überspringen der Textansage "Wählen Sie jetzt den Zeittakt" automatisch in die Aufnahmebereitschaft für die Nachricht des Teilnehmers B gehen. Wie vorher gesagt, signalisiert die erloschene LED "grün" der Funktionstaste "automatische Nachrichtenübermittlung" dem A-Teilnehmer, daß seine Botschaft dem B-Teilnehmer übermittelt und evtl. eine Antwort/Nachricht des B-Teilnehmers aufgezeichnet wurde.

## Patentansprüche

1. Verfahren zur automatischen Nachrichtenübermittlung über ein Telefon mit Anrufbeantworter, wobei die zu übermittelnde Sprachinformation auf dem Anrufbeantworter des Telefons des Teilnehmers A aufgezeichnet wird, daß zu einem eingestellten Termin bzw. in definierten Abständen automatisch Wählversuche zu dem Telefon des bestimmungsgemäßen Teilnehmers B vorgenommen werden, und daß nach Herstellung der Verbindung zum Telefon des Teilnehmers B die auf dem Anrufbeantworter des Teilnehmers A aufgezeichnete Sprachinformation zum Telefon des Teilnehmers B übertragen wird, **dadurch gekennzeichnet,** daß während der bestehenden Verbindung zum Telefon des Teilnehmers B nach der Übertragung der eigentlichen Sprachinformation vom Anrufbeantworter des Telefons des Teilnehmers A ein Hinweisansagetext zum Telefon des Teilnehmers B übertragen wird, welcher die Aufforderung enthält, nach einem Hörton, der die Umschaltung des Anrufbeantworters des Teilnehmers A auf Aufnahme anzeigt, eine Antwort auf die soeben übermittelte Sprachinformation bzw. eine Sprachmitteilung auf den auf Aufnahme geschalteten Anrufbeantworter des Telefons des Teilnehmers A aufzusprechen.
